# EUROPEAN PATENT SPECIFICATION

(11) **EP 2 556 267 B1**
(45) Date of publication and mention of the grant of the patent: **09.09.2015**
(21) Application number: 11712264.8
(22) Date of filing: 06.04.2011
(51) Int. Cl.: F16D 69/02

(54) **FRICTION ELEMENT, PARTICULARLY OF THE TYPE OF BRAKE PADS FOR BRAKING DEVICES FOR VEHICLE WHEELS AND THE LIKE, AND ITS METHOD OF PRODUCTION**
REIBUNGSELEMENT, IM BESONDEREN FÜR BREMSKLÖTZE FÜR BREMSVORRICHTUNGEN VON FAHRZEUGRÄDERN UND DERGLEICHEN, SOWIE HERSTELLUNGSVERFAHREN
ÉLÉMENT À FRICTION, EN PARTICULIER DU TYPE PLAQUETTES DE FREIN POUR DES DISPOSITIFS DE FREINAGE POUR DES ROUES DE VÉHICULE ET SIMILAIRES ET SON PROCÉDÉ DE PRODUCTION

(30) Priority: 28.03.2011 IT PD20110095; 07.04.2010 IT PD20100111
(43) Date of publication of application: 13.02.2013
(73) Proprietor: Viteg S.r.l., 35122 Padova (IT)
(72) Inventor: TROLESE, Vittorio, I-35139 Padova (IT)
(74) Representative: Modiano, Micaela Nadia
(86) International application number: PCT/EP2011/055321
(87) International publication number: WO 2011/124592

(56) References cited:
- EP-A1- 1 227 262
- EP-A1- 2 166 058
- EP-A2- 1 178 236
- WO-A1-96/22477
- FR-A1- 2 768 791
- JP-A- 2 283 785

## Description

### Technical field

The present invention relates to a friction element, particularly of the type of brake pads for braking devices for vehicle wheels and the like, and its method of production.

### Background Art

Nowadays, in the field of making brake pads for brakes and the like the use is known, in the mixture for making them, of asbestos, of lead, of zinc and of graphite, as well as of metal oxides added in order to give the brake pad to be obtained qualities of high resistance to the heat.

Furthermore, by modulating the relative quantities of such substances in the mixture, it is possible to implement a corresponding modulation of the friction coefficient that the brake pad obtained can achieve in contact with the organ which it is designed to brake.

These substances, however, are extremely toxic and, during the use of brake pads that comprise them, they tend to disperse in the environment in the form of dust which can easily be inhaled by individuals and which can therefore be critically dangerous to public health.

Therefore, there is a strong impetus, also legislative, to limit or prevent the use of these substances in the production of brake pads and the like.

Document WO 96/22477 A1 discloses a mixture composition for friction material comprising: a base alloy including elements such as zirconium, titanium (in the form of oxides) and a solid lubricant formed from a mixture of graphite and molybdenum (in the form of disulphide); phenolic resins in powder form, including friction powders; copper sulphide; baryta; amorphous graphite; and nitrylic type powdered rubber.

Hence, today the need is strongly felt to develop recipes for mixtures that make it possible to obtain friction elements that are as efficient, effective and durable as conventional brake pads, but which are free from the harmful substances used in these today.

### Disclosure of the Invention

The aim of the present invention is to meet such need by providing a friction element, particularly of the type of brake pads for braking devices

for vehicle wheels and the like, and its method of production, which makes it possible to avoid the use of said harmful substances while obtaining performance levels of braking effectiveness and durability in use that are at least equal to those of conventional brake pads.

Within this aim, an object of the invention is to provide a friction element, and its method of production, which makes it possible to achieve a better braking effectiveness than conventional brake pads, while also obtaining a longer duration of efficiency.

Another object of the invention is to provide a method for the production of a friction element that is simple to implement, the friction element obtained thereby being easy to use, and which can be produced at relatively low cost.

This aim, as well as these and other objects which will become better apparent hereinafter, are achieved by a friction element, particularly of the type of brake pads for braking devices for vehicle wheels and the like, having a composition comprising at least
- polymeric bonding material, in a percentage by weight substantially comprised between 18% and 22%,
- elastomeric material, in a percentage by weight substantially comprised between 1% and 5%,
- diamagnetic material,
- iron fibers, in a percentage by weight substantially comprised between 17% and 24%,
wherein said friction element is characterized in that said diamagnetic material is in a percentage by weight substantially comprised between 7% and 12% and said composition further comprises:
- a first ductile metal material in flakes, comprising brass, in a percentage by weight substantially comprised between 8% and 12%,
- a second ductile metal material in flakes, comprising bronze, in a percentage by weight substantially comprised between 12% and 16%,
- fibrous composite material with rock wool, in a percentage by weight substantially comprised between 2% and 6%,
- metal material for reinforcement and thermal dissipation in flakes, comprising dessicated iron, in a percentage by weight substantially comprised between 12% and 16%.

This aim and these objects, as well as others which will become better apparent hereinafter, are also achieved by a method for producing a friction element, particularly of the type of brake pads for braking devices for vehicle wheels and the like, according to one or more of the preceding claims, characterized in that it comprises the steps of:
- amalgamating a mixture comprising polymeric bonding material, in a percentage by weight substantially comprised between 18% and 22%, elastomeric material, in a percentage by weight substantially comprised between 1% and 5%, diamagnetic material, in a percentage by weight substantially comprised between 7% and 12%, iron fibers, in a percentage by weight substantially comprised between 17% and 24%, a first ductile metal material in flakes, comprising brass, in a percentage by weight substantially comprised between 8% and 12%, a second ductile metal material in flakes, comprising bronze, in a percentage by weight substantially comprised between 12% and 16%, fibrous composite material with rock wool, in a percentage by weight substantially comprised between 2% and 6%, metal material for reinforcement and thermal dissipation in flakes, comprising dessicated iron, in a percentage by weight substantially comprised between 12% and 16%,
- preforming the amalgamated mixture, via pressing in dies to a first preestablished compaction pressure, to obtain semi-finished pieces,
- rendering the semi-finished pieces monolithic by pressing, at a second preestablished compaction pressure, in molds heated at a preselected polymerisation temperature of the polymeric bonding material and/or of the elastomeric material.

### Ways of carrying out the Invention

Further characteristics and advantages of the invention will become better apparent from the detailed description of a preferred, but not exclusive, embodiment of the friction element and of its method of production according to the invention.

A friction element, particularly of the type of brake pads for braking devices for vehicle wheels and the like, according to the invention has a peculiarity in that it has a composition comprising at least
- polymeric bonding material, in a percentage by weight substantially comprised between 18% and 22%,
- elastomeric material, in a percentage by weight substantially comprised between 1% and 5%,
- diamagnetic material, in a percentage by weight substantially comprised between 7% and 12%,
- iron fibers, in a percentage by weight substantially comprised between 17% and 24%,
- a first ductile metal material in flakes, comprising brass, in a percentage by weight substantially comprised between 8% and 12%,
- a second ductile metal material in flakes, comprising bronze, in a percentage by weight substantially comprised between 12% and 16%,
- fibrous composite material with rock wool, in a percentage by weight substantially comprised between 2% and 6%,
- metal material for reinforcement and thermal dissipation in flakes, comprising dessicated iron, in a percentage by weight substantially comprised between 12% and 16%.

Advantageously, the polymeric bonding material comprises phenolic resins, preferably of the category of novolacs.

The elastomeric material conveniently comprises pyre-reticulated polymerized nitrile rubber.

Conveniently, the diamagnetic material comprises bismite, which is a mineral of bismuth.

The second ductile metal material in flakes advantageously comprises aluminum.

Furthermore, preferably the metal material for reinforcement and thermal dissipation in flakes comprises aluminum.

The phenolic resins and the ductile metal materials give the friction element flame-resistant characteristics and prevent its fatigue in operation.

Furthermore, the bismite, being a diamagnetic material, hinders the engendering of parasite currents, and of the associated magnetic fields, in the friction element and in the mechanical component which in use is adapted to brake on command.

The iron fibers enable an effective dispersion of the heat generated during the use of the friction element, so as to allow operating temperatures, with other conditions being equal, that are lower than the operating temperatures of conventional brake pads.

The ductile metal materials and the elastomeric material perform a function that is substantially equivalent to that performed by the asbestos, lead, zinc and graphite which are present in the mixture of conventional brake pads, which are adapted, by varying the quantities employed, to modulate the friction effect with the organ to be braked during the use of the brake pad that comprises them.

Furthermore, the ductile metal materials and the elastomeric material allow an effective amalgam of the mixture.

The fibrous composite material with rock wool, better known in the field of makers of brake pads under the name of "Bore", conveniently performs a function of keeping substantially stable, with the varying of the operating temperature,
- the friction coefficient, between the friction element that comprises it and the organ to be braked,
- the resistance to abrasion of the friction element and therefore its consumption,
- the coefficient of transmission of heat of the friction element, in order to ensure an adequate disposal of heat.

The Bore conveniently has a low heat conductibility and, due to its open cell structure, it is sound-absorbing, so as to permit a considerable abatement of the noise, in operation, of friction elements employed for braking organs in movement, even in the heaviest of applications.

Furthermore, according to the invention, a method for producing a friction element, particularly of the type of brake pads for braking devices for vehicle wheels and the like, has a peculiarity in that it comprises the steps of
- amalgamating a mixture comprising polymeric bonding material, in a percentage by weight substantially comprised between 18% and 22%, elastomeric material, conveniently liquid, in a percentage by weight substantially comprised between 1% and 5%, diamagnetic material, in a percentage by weight substantially comprised between 7% and 12%, iron fibers, in a percentage by weight substantially comprised between 17% and 24%, a first ductile metal material in flakes, comprising brass, in a percentage by weight substantially comprised between 8% and 12%, a second ductile metal material in flakes, comprising bronze, in a percentage by weight substantially comprised between 12% and 16%, fibrous composite material with rock wool, in a percentage by weight substantially comprised between 2% and 6%, metal material for reinforcement and thermal dissipation in flakes, comprising dessicated iron, in a percentage by weight substantially comprised between 12% and 16%,
- preforming the amalgamated mixture, via pressing in dies to a first preestablished compaction pressure, to obtain semi-finished pieces,
- rendering the semi-finished pieces monolithic by pressing, at a second preestablished compaction pressure, in molds heated at a preselected polymerisation temperature of the polymeric bonding material and/or of the elastomeric material.

Advantageously, the amalgamation operation involves the mixing of the mixture in a mixing chamber by means of helices adapted to separate the flakes, of the ductile metal materials, possibly defining agglomerates, the helices being also adapted to mix the components of the mixture, preferably at a temperature that is substantially ambient and for a mixing time selected in order to obtain homogeneity of the mixture.

Conveniently, the first preestablished pressure is substantially equal to 80 Kgf/cm2.

Preferably, the second preestablished pressure is substantially equal to 150 Kgf/cm2, the preselected temperature being substantially equal to 160°C.

The polymeric bonding material conveniently comprises phenolic resins, and furthermore, the elastomeric material advantageously comprises pre-reticulated polymerized nitrile rubber.

The diamagnetic material preferably comprises bismite.

Conveniently the second ductile metal material in flakes comprise aluminum and the metal material for reinforcement and thermal dissipation in flakes conveniently comprises aluminum.

The preforming operation preferably involves the placing in molds of a metal support upon which ran adhesive material is arranged, which is adapted to connect the semi-finished piece to be obtained with the metal support.

The operation to render the semi-finished pieces monolithic advantageously involves the use of hydraulic presses for pressing the semi-finished pieces.

Conveniently, during the operation to render the semi-finished piece monolithic, the semi-finished piece is anchored to the metal support by the thermal activation of the adhesive material.

From tests carried out it has been found that a friction element according to the invention obtained using this method, used as a brake pad in a braking device, makes it possible to achieve a friction coefficient that is substantially stable both over time and with the varying of the operating temperature and pressure.

The consumption of a friction element according to the invention, and the temperature reached during its use, are less than those that occur during the use of conventional brake pads.

Such performance levels thus enable an advantageous use of friction elements according to the invention even under heavy operating conditions such as for example during use as brake pads for brakes on trains, on underground/light rail trains and on trams, or also as brake pads for brakes on armoured vehicles or other military vehicles like amphibious landing vehicles, or also on agricultural vehicles or as brake pads for brakes on the undercarriage of aircraft.

In practice it has been found that the invention fully achieves the intended aim and objects by providing a method for producing a friction element, particularly of the type of brake pads for braking devices for vehicle wheels and the like, and producing thereby a friction element which makes it possible to avoid the use of harmful substances used today in conventional brake pads, while obtaining performance levels of braking effectiveness and durability in use that are at least equal to those of conventional brake pads.

A method for producing a friction element, according to the invention, makes it possible, by using the friction element obtained, to achieve a better braking effectiveness than conventional brake pads, while also obtaining a longer duration of efficiency.

Furthermore, a method for the production of a friction element, according to the invention, is simple to implement, and the friction element obtained according to the invention is easy to use, and can be produced at relatively low cost.

## Claims

1. A friction element, particularly of the type of brake pads for braking devices for vehicle wheels and the like, having a composition comprising at least
- polymeric bonding material, in a percentage by weight substantially comprised between 18% and 22%,
- elastomeric material, in a percentage by weight substantially comprised between 1% and 5%,
- diamagnetic material,
- iron fibers, in a percentage by weight substantially comprised between 17% and 24%,
wherein said friction element is **characterized in that** said diamagnetic material is in a percentage by weight substantially comprised between 7% and 12% and said composition further comprises:
- a first ductile metal material in flakes, comprising brass, in a percentage by weight substantially comprised between 8% and 12%,
- a second ductile metal material in flakes, comprising bronze, in a percentage by weight substantially comprised between 12% and 16%,
- fibrous composite material with rock wool, in a percentage by weight substantially comprised between 2% and 6%,
- metal material for reinforcement and thermal dissipation in flakes, comprising dessicated iron, in a percentage by weight substantially comprised between 12% and 16%.

2. The friction element according to claim 1, **characterized in that** said polymeric bonding material comprises phenolic resins.

3. The friction element according to one or more of the preceding claims, **characterized in that** said elastomeric materials comprises pre-reticulated polymerized nitrile rubber.

4. The friction element according to one or more of the preceding claims, **characterized in that** said diamagnetic material comprises bismite.

5. The friction element according to one or more of the preceding claims, **characterized in that** said second ductile metal material in flakes comprises aluminum.

6. The friction element according to one or more of the preceding claims, **characterized in that** said metal material for reinforcement and thermal dissipation in flakes comprises aluminum.

7. A method for producing a friction element, particularly of the type of brake pads for braking devices for vehicle wheels and the like, according to one or more of the preceding claims, **characterized in that** it comprises the steps of:
- amalgamating a mixture comprising polymeric bonding material, in a percentage by weight substantially comprised between 18% and 22%, elastomeric material, in a percentage by weight substantially comprised between 1% and 5%, diamagnetic material, in a percentage by weight substantially comprised between 7% and 12%, iron fibers, in a percentage by weight substantially comprised between 17% and 24%, a first ductile metal material in flakes, comprising brass, in a percentage by weight substantially comprised between 8% and 12%, a second ductile metal material in flakes, comprising bronze, in a percentage by weight substantially comprised between 12% and 16%, fibrous composite material with rock wool, in a percentage by weight substantially comprised between 2% and 6%, metal material for reinforcement and thermal dissipation in flakes, comprising dessicated iron, in a percentage by weight substantially comprised between 12% and 16%,
- preforming the amalgamated mixture, via pressing in dies to a first preestablished compaction pressure, to obtain semi-finished pieces,
- rendering said semi-finished pieces monolithic by pressing, at a second preestablished compaction pressure, in molds heated at a preselected polymerisation temperature of said polymeric bonding material and/or of said elastomeric material.

8. The method for producing a friction element, according to claim 7, **characterized in that** said amalgamation operation involves the mixing of said mixture in a mixing chamber by means of helices adapted to separate the flakes, of said ductile metal materials, possibly defining agglomerates, said helices being also adapted to mix the components of said mixture.

9. The method for producing a friction element, according to one or more of claims 7 and 8, **characterized in that** said first preestablished pressure is substantially equal to 80 Kg_{f}/cm².

10. The method for producing a friction element, according to one or more of claims 7, 8 and 9, **characterized in that** said second preestablished pressure is substantially equal to 150 Kg_{f}/cm², said preselected temperature being substantially equal to 160°C.

11. The method for producing a friction element, according to one or more of claims 7 to 10, **characterized in that** said polymeric bonding material comprises phenolic resins.

12. The method for producing a friction element, according to one or more of claims 7 to 11, **characterized in that** said elastomeric material comprises pre-reticulated polymerized nitrile rubber.

13. The method for producing a friction element, according to one or more of claims 7 to 12, **characterized in that** said diamagnetic material comprises bismite.

14. The method for producing a friction element, according to one or more of claims 7 to 13, **characterized in that** said second ductile metal material in flakes comprises aluminum.

15. The method for producing a friction element, according to one or more of claims 7 to 14, **characterized in that** said metal material for reinforcement and thermal dissipation in flakes comprises aluminum.

## Patentansprüche

1. Ein Reibungselement, insbesondere der Art Bremsklötze für Bremsvorrichtungen für Fahrzeugräder und dergleichen, eine Zusammensetzung aufweisend, die zumindest Folgendes umfasst:
- im Wesentlichen zwischen 18 Gew.-% und 22 Gew.-% Polymerbindemittel,
- im Wesentlichen zwischen 1 Gew.-% und 5 Gew.-% Elastomermaterial,
- diamagnetisches Material,
- im Wesentlichen zwischen 17 Gew.-% und 24 Gew.-% Eisenfasern,
worin das Reibungselement **dadurch gekennzeichnet ist, dass** im Wesentlichen zwischen 7 Gew.-% und 12 Gew.-% diamagnetisches Material vorhanden ist und die Zusammensetzung weiter Folgendes umfasst:
- im Wesentlichen zwischen 8 Gew.-% und 12 Gew.-% eines ersten duktilen Metallmaterials in Flocken, das Messing umfasst,
- im Wesentlichen zwischen 12 Gew.-% und 16 Gew.-% eines zweiten duktilen Metallmaterials in Flocken, das Bronze umfasst,
- im Wesentlichen zwischen 2 Gew.-% und 6 Gew.-% faseriges Verbundmaterial mit Steinwolle,
- im Wesentlichen zwischen 12 Gew.-% und 16 Gew.-% Metallmaterial zur Verstärkung und Wärmedissipation in Flocken, das getrocknetes Eisen umfasst.

2. Das Reibungselement gemäß Anspruch 1, **dadurch gekennzeichnet, dass** das Polymerbindemittel Phenolharze umfasst.

3. Das Reibungselement gemäß einem oder mehreren der vorhergehenden Ansprüche, **dadurch gekennzeichnet, dass** das Elastomermaterial vorvernetzten polymerisierten Nitrilkautschuk umfasst.

4. Das Reibungselement gemäß einem oder mehreren der vorhergehenden Ansprüche, **dadurch gekennzeichnet, dass** das diamagnetische Material Bismit umfasst.

5. Das Reibungselement gemäß einem oder mehreren der vorhergehenden Ansprüche, **dadurch gekennzeichnet, dass** das zweite duktile Metallmaterial in Flocken Aluminium umfasst.

6. Das Reibungselement gemäß einem oder mehreren der vorhergehenden Ansprüche, **dadurch gekennzeichnet, dass** das Metallmaterial zur Verstärkung und Wärmedissipation in Flocken Aluminium umfasst.

7. Ein Verfahren zur Herstellung eines Reibungselements, insbesondere der Art Bremsklötze für Bremsvorrichtungen für Fahrzeugräder und dergleichen, gemäß einem oder mehreren der vorhergehenden Ansprüche, **dadurch gekennzeichnet, dass** es folgende Schritte umfasst:
- Verrühren einer Mischung, die Folgendes umfasst: im Wesentlichen zwischen 18 Gew.-% und 22 Gew.-% Polymerbindemittel, im Wesentlichen zwischen 1 Gew.-% und 5 Gew.-% Elastomermaterial, im Wesentlichen zwischen 7 Gew.-% und 12 Gew.-% diamagnetisches Material, im Wesentlichen zwischen 17 Gew.-% und 24 Gew.-% Eisenfasern, im Wesentlichen zwischen 8 Gew.-% und 12 Gew.-% eines ersten duktilen Metallmaterials in Flocken, das Messing umfasst, im Wesentlichen zwischen 12 Gew.-% und 16 Gew.-% eines zweiten duktilen Metallmaterials in Flocken, das Bronze umfasst, im Wesentlichen zwischen 2 Gew.-% und 6 Gew.-% faseriges Verbundmaterial mit Steinwolle, im Wesentlichen zwischen 12 Gew.-% und 16 Gew.-% Metallmaterial zur Verstärkung und Wärmedissipation in Flocken, das getrocknetes Eisen umfasst,
- Vorformen der verrührten Mischung, durch Pressen in Formen bei einem ersten voreingestellten Kompaktierungsdruck, um halbfertige Teile zu erhalten,
- Monolithische Formgebung der halbfertigen Teile durch Pressen, bei einem zweiten voreingestellten Kompaktierungsdruck, in Formen, die bei einer voreingestellten Polymerisationstemperatur des Polymerbindemittels und/oder des Elastomermaterials erhitzt werden.

8. Das Verfahren zur Herstellung eines Reibungselements gemäß Anspruch 7, **dadurch gekennzeichnet, dass** der Vorgang des Verrührens Folgendes umfasst: das Mischen der Mischung in einer Mischkammer mit Hilfe von Spiralen, die dazu ausgebildet sind, die Flocken der duktilen Metallmaterialien zu trennen, die möglicherweise Agglomerate bilden, wobei die Spiralen auch dazu ausgebildet sind, die Bestandteile der Mischung zu mischen.

9. Das Verfahren zur Herstellung eines Reibungselements gemäß einem oder mehreren der Ansprüche 7 und 8, **dadurch gekennzeichnet, dass** der erste voreingestellte Druck im Wesentlichen 80 kg_{f}/cm² entspricht.

10. Das Verfahren zur Herstellung eines Reibungselements gemäß einem oder mehreren der Ansprüche 7, 8 und 9, **dadurch gekennzeichnet, dass** der zweite voreingestellte Druck im Wesentlichen 150 kg_{f}/cm² entspricht und die vorgewählte Temperatur im Wesentlichen 160°C beträgt.

11. Das Verfahren zur Herstellung eines Reibungselements gemäß einem oder mehreren der Ansprüche von 7 bis 10, **dadurch gekennzeichnet, dass** das Polymerbindemittel Phenolharze umfasst.

12. Das Verfahren zur Herstellung eines Reibungselements gemäß einem oder mehreren der Ansprüche von 7 bis 11, **dadurch gekennzeichnet, dass** das Elastomermaterial vorvernetzten polymerisierten Nitrilkautschuk umfasst.

13. Das Verfahren zur Herstellung eines Reibungselements gemäß einem oder mehreren der Ansprüche von 7 bis 12, **dadurch gekennzeichnet, dass** das diamagnetische Material Bismit umfasst.

14. Das Verfahren zur Herstellung eines Reibungselements gemäß einem oder mehreren der Ansprüche von 7 bis 13, **dadurch gekennzeichnet, dass** das zweite duktile Metallmaterial in Flocken Aluminium umfasst.

15. Das Verfahren zur Herstellung eines Reibungselements gemäß einem oder mehreren der Ansprüche von 7 bis 14, **dadurch gekennzeichnet, dass** das Metallmaterial zur Verstärkung und Wärmedissipation in Flocken Aluminium umfasst.

## Revendications

1. Élément de friction, en particulier du type plaquettes de frein pour des dispositifs de freinage pour les roues d'un véhicule et analogues, ayant une composition comprenant au moins :
- un matériau de liaison polymère, en un pourcentage en poids sensiblement compris entre 18 % et 22 %,
- un matériau élastomère, en un pourcentage en poids sensiblement compris entre 1 % et 5 %,
- un matériau diamagnétique,
- des fibres de fer, en un pourcentage en poids sensiblement compris entre 17 % et 24 %,
ledit élément de friction étant **caractérisé en ce que** ledit matériau diamagnétique est présent en un pourcentage en poids sensiblement compris entre 7 % et 12 % et ladite composition comprend en outre :
- un premier matériau métallique ductile sous forme de paillettes, comprenant du laiton, en un pourcentage en poids sensiblement compris entre 8 % et 12 %,
- un second matériau métallique ductile sous forme de paillettes, comprenant du bronze, en un pourcentage en poids sensiblement compris entre 12 % et 16 %,
- un matériau composite fibreux avec de la laine de roche, en un pourcentage en poids sensiblement compris entre 2 % et 6 %,
- un matériau métallique pour le renforcement et la dissipation thermique sous forme de paillettes, comprenant du fer desséché, en un pourcentage en poids sensiblement compris entre 12 % et 16 %.

2. Élément de friction selon la revendication 1, **caractérisé en ce que** ledit matériau de liaison polymère comprend des résines phénoliques.

3. Élément de friction selon une ou plusieurs des revendications précédentes, **caractérisé en ce que** ledit matériau élastomère comprend du caoutchouc de nitrile polymérisé préréticulé.

4. Élément de friction selon une ou plusieurs des revendications précédentes, **caractérisé en ce que** ledit matériau diamagnétique comprend du bismite.

5. Élément de friction selon une ou plusieurs des revendications précédentes, **caractérisé en ce que** ledit second matériau métallique ductile sous forme de paillettes comprend de l'aluminium.

6. Élément de friction selon une ou plusieurs des revendications précédentes, **caractérisé en ce que** ledit matériau métallique pour le renforcement et la dissipation thermique sous forme de paillettes comprend de l'aluminium.

7. Procédé de production d'un élément de friction, en particulier du type plaquettes de frein pour des dispositifs de freinage pour les roues d'un véhicule et analogues selon une ou plusieurs des revendications précédentes, **caractérisé en ce qu'**il comprend les étapes consistant à :
- amalgamer un mélange comprenant un matériau de liaison polymère, en un pourcentage en poids sensiblement compris entre 18% et 22 %, un matériau élastomère, en un pourcentage en poids sensiblement compris entre 1 % et 5 %, un matériau diamagnétique, en un pourcentage en poids sensiblement compris entre 7 % et 12 %, des fibres de fer, en un pourcentage en poids sensiblement compris entre 17 % et 24 %, un premier matériau métallique ductile sous forme de paillettes, comprenant du laiton, en un pourcentage en poids sensiblement compris entre 8 % et 12 %, un second matériau métallique ductile sous forme de paillettes, comprenant du bronze, en un pourcentage en poids sensiblement compris entre 12 % et 16 %, un matériau composite fibreux avec de la laine de roche, en un pourcentage en poids sensiblement compris entre 2 % et 6 %, un matériau métallique pour le renforcement et la dissipation thermique sous forme de paillettes, comprenant du fer desséché, en un pourcentage en poids sensiblement compris entre 12 % et 16 %,
- préformer le mélange amalgamé, par pression dans des filières à une première pression de compactage prédéfinie, pour obtenir des pièces semi-finies,
- rendre lesdites pièces semi-finies monolithiques par pressage, à une seconde pression de compactage prédéfinie, dans des moules chauffés à une température de polymérisation prédéfinie dudit matériau de liaison polymère et/ou dudit matériau élastomère.

8. Procédé de production d'un élément de friction selon la revendication 7, **caractérisé en ce que** ladite opération d'amalgamation implique le mélange dudit mélange dans une chambre de mélange au moyen d'hélices conçues pour séparer les paillettes desdits matériaux métalliques ductiles, éventuellement définissant des agglomérats, lesdites hélices étant également conçues pour mélanger les composants dudit mélange.

9. Procédé de production d'un élément de friction selon une ou plusieurs des revendications 7 et 8, **caractérisé en ce que** ladite première pression prédéfinie est sensiblement égale à 80 Kg_{f}/cm².

10. Procédé de production d'un élément de friction selon une ou plusieurs des revendications 7, 8 et 9, **caractérisé en ce que** ladite seconde pression prédéfinie est sensiblement égale à 150 Kg_{f}/cm², ladite température prédéfinie étant sensiblement égale à 160 °C.

11. Procédé de production d'un élément de friction selon une ou plusieurs des revendications 7 à 10, **caractérisé en ce que** ledit matériau de liaison polymère comprend des résines phénoliques.

12. Procédé de production d'un élément de friction selon une ou plusieurs des revendications 7 à 11, **caractérisé en ce que** ledit matériau élastomère comprend du caoutchouc de nitrile polymérisé préréticulé.

13. Procédé de production d'un élément de friction selon une ou plusieurs des revendications 7 à 12, **caractérisé en ce que** ledit matériau diamagnétique comprend du bismite.

14. Procédé de production d'un élément de friction selon une ou plusieurs des revendications 7 à 13, **caractérisé en ce que** ledit second matériau métallique ductile sous forme de paillettes comprend de l'aluminium.

15. Procédé de production d'un élément de friction selon une ou plusieurs des revendications 7 à 14, **caractérisé en ce que** ledit matériau métallique pour le renforcement et la dissipation thermique sous forme de paillettes comprend de l'aluminium.
